# EUROPÄISCHE PATENTSCHRIFT

(11) **EP 0 917 827 B1**
(45) Veröffentlichungstag und Bekanntmachung des Hinweises auf die Patenterteilung: **24.01.2001**
(21) Anmeldenummer: 98121644.3
(22) Anmeldetag: 12.11.1998
(51) Int. Cl.: A23L 1/314, A23L 1/317, A23L 1/318

(54) **Verfahren zur Herstellung von Speck und die besondere Anwendung des nach diesem Verfahren hergestellten Specks**
Method for the preparation of bacon and specific use of the bacon prepared by this method
Procédé de préparation de lard et l'utilisation spécifique du lard obtenu selon ce procédé

(30) Priorität: 23.11.1997 DE 19754331
(43) Veröffentlichungstag der Anmeldung: 26.05.1999
(73) Patentinhaber: EG Fleischwarenfabrik Dieter Hein GmbH & Co. KG, 49205 Hasbergen (DE)
(72) Erfinder: Hein, Dieter, 49205 Hasbergen (DE)
(74) Vertreter: Köhler, Reimund

(56) Entgegenhaltungen:
- DE-A- 2 300 297
- DE-A- 3 229 567
- HAVAS F: "Haltbarkeit von vakuumverpacktem Slab-Bacon." FLEISCH, Bd. 44, Nr. 10, 1990, Seiten 461-464, XP002091922
- RIORDAN P B: "Shelf-life of vacuum packed rashers." FOOD PROGRESS, Bd. 2, Nr. 7, 1974, Seite 2 XP002091923 Meat Res. Dept., An Foras Taluntais, Dunsinea Res. Centre, Castleknock, Co. Dublin, Irish Republic

## Beschreibung

Die Erfindung bezieht sich auf ein Verfahren zur Herstellung von haltbarem geräuchertem Bauchspeck nach dem Oberbegriff des Patentanspruches und die besondere Anwendung des nach dem Verfahren hergestellten Specks.

Die DE 30 33 036 nennt ein Verfahren zur Herstellung von haltbarem (safe) Schinken und Speck, bei dem eine Masse (Flüssigkeit oder pulverförmige Pökelmittel) mit Sorbinsäure versetzt ist und durch Injektion, Aufsprühen, Imprägnierung oder Eintauchen für die Zugabe der Flüssigkeit und durch Aufsprühen oder Imprägnieren für die Zugabe des Pulvers zugesetzt wird. Dieses bekannte Verfahren ist zur Haltbarmachung geeignet und nutzt bekannte Mittel, die getrennt zu dem Fleisch zugesetzt werden. Das Verfahren ist nur zur Haltbarmachung und besonderen Aufbereitung des Specks in herkömmlicher Art geeignet. Eine mechanische Aufbereitung des Schinkens bzw. des Specks zur Streichbarmachung ist nicht Gegenstand der Erfindung.
Es sind Verfahren zur Herstellung von Rohwurst nach DE 32 29 567 bekannt, bei dem die einzelnen Verfahrensschritte der Zerkleinerung benannt sind und der verwendete Speck darin nur als Zugabe eine Bedeutung hat. Das Substanzwasser wird zu ca. 20% duch Pressen/Schleudern dem Fleisch entzogen. Auch dieses Verfahren ist nicht für die Zerkleinerung und Aufbereitung des Speckes zu einer streichfähigen haltbaren Masse geeignet.
Bekannt ist allgemein, daß Bauchspeck im Stück ausgepackt, entschwartet und auf einem Brett bei Verletzungsgefahr geschnitten wird. Die Reststücke werden wieder eingepackt und lose im Kühlschrank aufbewahrt. Bei dieser Verfahrensweise ist bereits nach 14 Tagen Geschmacksverlust und Verderbnis zu verzeichnen.
Es sind keine Verfahren zur Aufbereitung streichfähigen und haltbaren Speckes bekannt, die auch eine Abfüllung in Tuben zulassen. Auch sind aus den bekannten Verfahren keine Kombinationen ableitbar, die diese genannten Nachteile beseitigen könnten.
Der Erfindung liegt die Aufgabe zugrunde, ein Verfahren zur Herstellung von Speck und seine besondere Anwendung im Gebrauch zu schaffen, bei dem der so behandelte und geformte Speck ohne chemische Zusätze und Stabilisatoren lange ohne Kühlung bei Beibehaltung des Geschmacks und auch lange im nicht verpackten Zustand bei Kühlung aufbewahrt und bei Bedarf mühelos portionsweise aus einem Behältnis entnommen werden kann, wobei die Reihenfolge der Verfahrensschritte Fett-Magerstufen und Temperaturen sowie die Art der Pökelung und Räucherung vor dem machinellen Aufbereiten zum Abfüllen des Specks vorschreibt, wobei durch eine besondere Vermengung der Speckteilchen mit Zusätzen diese Abfüllung ermöglicht wird. Die abgefüllte Speckmasse soll durch Einhaltung bestimmter Temperaturen ausreifen und die Aufbewahrung hohen hygienischen Ansprüchen gerecht werden.
Die Lösung wird durch die Merkmale des Patentanspruchs erreicht. Durch das erfindungsgemäße Verfahren gelingt erstmals Speck beispielsweise in Tuben anzuwenden bei gleichzeitiger Erhöhung der Haltbarkeit und einer frei von chemischen Zusätzen und Stabilisatoren hergestellten Speckmasse.
Die Erfindung soll an einem Beispiel näher erläutert werden. Ausgesuchter Bauchspeck mit einer Fett-Magerstufe von 35% bis 65% wird über eine bekannte Infrarotanlage Faser verlesen, um bei geeignetem ph-Wert, den optimalen Rohstoff für die weitere Bearbeitung zu finden. Der so ausgesuchte Bauchspeck wird nun bei einer Temperatur von + 2°C bis 3°C im abgedunkelten Kühlraum gereift und gepökelt. Nach dieser schonenden bekannten Reifung nach "Graved-Art" wird das Salz vom Speck abgeblasen und der Speck mit gereinigtem Buchenrauch bei einer Kerntemperatur von unter +25° C goldgelb geräuchert. Anschließend wird der so vorbereitete Speck maschinell zerkleinert und im Vakuumverfahren in einem Tumbler mit einem Ölmantel, insbesondere Pflanzenölmantel versehen. Dabei ummantelt das Öl die einzelnen Speckteilchen. Der so präparierte Speck erhält damit seine Haltbarkeit, wird somit nicht ranzig und ist zugleich in einer Konsistenz geschmeidiger Art, die es ermöglicht, daß diese Speckmasse in eine Tube gefüllt und wieder aus dieser Tube durch Pressen entnommen werden kann. Die Füllung der Tube geschieht derart, daß diese Speckmasse auf +30°C temperiert und in den eigens dafür entwickelten Vacu-Pressfüller gegeben wird. Mit dieser Einrichtung wird die Speckmasse in Tuben gepreßt und die Tuben werden anschließend verschlossen. Nach dem Füllen und Verschließen wird die Tube mit der gefüllten Speckmasse auf 0°C bis +1°C abgekühlt. Danch wird diese Tube unter Raumtemperatur-Bedingungen aufbewahrt, so daß langsam die Raum- und Umgebungstemperatur angenommen wird und dabei die Speckmasse geschmacklich durchreift. Jetzt nimmt auch die Tube ihre optimale Form an, so daß nach dem Öffnen des Verschlusses der Speck in gewünschten streichfähigen Portionen herausgedrückt werden kann. Nach Verschließen kann diese Speckmasse in der Tube 4 Wochen mit Kühlung ohne Geschmacksverlust und ohne zu verderben aufbewahrt werden. Die ungeöffnete Tube erhält die Speckmasse nahezu 6 Monate ohne Kühlung. Es ist denkbar und im Sinne der Erfindung, anstelle der beschriebenen Tube ähnlche Behältnisse für das Aufbewahren der Speckmasse vorzusehen. Beispielsweise können das veschweißte Beutel sein. Dieses Verfahren unterscheidet sich vorteilhaft von den bekannten dadurch, daß eine Konsistenz des Specks erreicht wird, und der Speck zur Anwendung in Tuben aufbereitet wird und das Verfahren und die Anwendung des nach diesem Verfahren hergestellten Specks außerdem Vorteile hinsichtlich der längeren Haltbarkeit und der nicht durch chemische Zusätze und/oder Stabilisatoren belasteten Speckmasse sowie die Möglichkeit einer hygienischen Aufbewahrung aufweist.

## Patentansprüche

1. Verfahren zur Herstellung von Speck und die besondere Anwendung des nach diesem Verfahren hergestellten Specks, wobei bekannte Infrarotanlagen, Zerkleinerungs- und Rührverfahren unter Verwendung von Zusätzen verwendet werden, dadurch gekennzeichnet, daß eine nach dem Verfahren hergestellte Speckmasse, insbesondere in Tuben angewendet wird, wobei dazu die Speckmasse derart aufbereitet wird, daß vorzugsweise Bauchspeck mit einer Fett-Magerstufe von 35% bis 65% über eine Infrarotanlage Faser verlesen wird und mit einem geeigneten ph-Wert bei einer Temperatur von +2°C bis +3°C im abgedunkelten Kühlraum gepökelt wird und nach "Graved-Art" reift, das Salz danach vom Speck abgeblasen und der Speck mit gereinigtem Buchenrauch bei einer Kerntemperatur < +25°C goldgelb geräuchert wird und der so vorbereitete Speck maschinell zerkleinert und unter Zusatz von Öl, insbesondere Pflanzenöl in einem Rührwerk vermengt wird, wobei das Pflanzenöl die zerkleinerten Speckteilchen ummantelt und somit diese geschmeidig und haltbar macht und im Vakuumverfahren in einem Tumbler bei 30°C diese Speckmasse in vorzugsweise Tuben gefüllt wird und die Tube mit dieser Füllung verschlossen und auf 0°C bis 1°C abgekühlt und danach bei Raumtemperatur-Bedingungen aufbewahrt wird, so daß die Raum- und Umgebungstemperatur angenommen wird und dabei die Füllung geschmacklich durchreift und die Tube zugleich ihre optimale Form annimmt und nach dem Öffnen der ausgereifte, haltbare, streichfähige Speck als Speckmasse herausgedrückt werden kann.

## Claims

1. Process for producing bacon and the particular use of the bacon produced by this process, known infrared units, comminution and agitation methods being used with use of additives, characterized in that a bacon mixture prepared by the process is used in particular in tubes, for this purpose the bacon mixture being prepared in such a manner that preferably streaky bacon having a fat to lean grade of 35% to 65% is picked out via a fibre infrared unit and is cured at a suitable pH at a temperature of +2°C to +3°C in a darkened cold room and matured in a "gravad" manner, the salt is then blown off from the bacon and the bacon is smoked with purified beechwood smoke to golden yellow at a core temperature < +25°C and the bacon thus prepared is mechanically comminuted and is mixed in an agitator with addition of oil, in particular vegetable oil, the vegetable oil coating the comminuted bacon particles and thus making these malleable and shelf-stable and this bacon mixture being charged, in a vacuum process in a tumbler at 30°C, into preferably tubes and the tube containing this filling being sealed and cooled to 0°C to 1°C and then being stored under room temperature conditions, so that the room temperature and ambient temperature is adopted and thus the filling matures in flavour and the tube at the same time adopts its optimum shape and after opening the matured, shelf-stable, spreadable bacon can be forced out as bacon mixture.

## Revendications

1. Procédé de préparation de lard et utilisation spécifique du lard obtenu par ce procédé, dans lesquels on utilise des installations infrarouges connues et des procédés de broyage et d'agitation en employant des additifs, caractérisés en ce qu'on utilise une masse de lard préparée selon le procédé, en particulier, en tubes, la masse de lard étant préparée à cet effet de manière telle que, de préférence, une masse de lard de poitrine ayant un rapport gras-maigre de 35% à 65% soit recueillie par une installation infrarouge à fibre, salée à une valeur du pH appropriée et une température de +2°C à +3°C dans une chambre frigorifique obscurcie et portée à maturation par enfouissement, le sel est ensuite éliminé du lard par air et celui-ci est fumé par de la fumée de hêtre épurée à une température centrale inférieure à +25°C jusqu'à l'obtention d'une couleur jaune doré et le lard ainsi préparé est broyé en machine et mélangé à de l'huile, en particulier de l'huile végétale, dans un appareil d'agitation, l'huile végétale revêtant les particules de lard broyées et rendant donc celles-ci souples et conservables et cette masse de lard étant introduite sous procédé à vide dans un culbuteur à 30°C de préférence dans des tubes et le tube étant fermé avec cette charge et refroidi à 0 à 1°C, puis conservé à des conditions de température ambiante de telle sorte que la température ambiante et environnante soit absorbée, que la charge mature alors en goût et que le tube adopte simultanément sa forme optimale et qu'après l'ouverture, le lard à tartiner, mature, conservable, puisse être expulsé sous forme de masse de lard.
